# EUROPÄISCHE PATENTSCHRIFT

(11) **EP 1 136 331 B1**
(45) Veröffentlichungstag und Bekanntmachung des Hinweises auf die Patenterteilung: **15.11.2006**
(21) Anmeldenummer: 01105097.8
(22) Anmeldetag: 02.03.2001
(51) Int. Cl.: B60R 22/02, B60R 22/24

(54) **Schliesszungenanordnung für einen Kraftfahrzeug-Sicherheitsgurt**
Locking tongue arrangement for a vehicle seatbelt
Ensemble languette de verrouillage pour une ceinture de sécurité de véhicule

(30) Priorität: 24.03.2000 DE 10014889
(43) Veröffentlichungstag der Anmeldung: 26.09.2001
(73) Patentinhaber: Volkswagen Aktiengesellschaft, 38436 Wolfsburg (DE)
(72) Erfinder: Dachrodt, Berthold, 38465 Brome (DE); Bernhardt, Günter, 38458 Velpke (DE)

(56) Entgegenhaltungen:
- EP-A- 0 769 432
- EP-A- 0 890 489
- DE-A- 4 415 635
- FR-A- 2 701 906
- PATENT ABSTRACTS OF JAPAN vol. 1999, no. 12, 29. Oktober 1999 (1999-10-29) & JP 11 198756 A (MAZDA MOTOR CORP), 27. Juli 1999 (1999-07-27)

## Beschreibung

Die Erfindung betrifft eine Schließzungenanordnung für einen Kraftfahrzeug-Sicherheitsgurt, der sich in ausgezogenem Zustand von einer am Dachhimmel eines Kraftfahrzeugs angeordneten Umlenk- oder Aufwickelvorrichtung nach unten zu zwei beiderseits eines Sitzes angeordneten Gurtschlössern erstreckt, wobei der Sicherheitsgurt zwei Schließzungen aufweist, die bei aufgewickeltem Sicherheitsgurt am Dachhimmel nahe beieinander in einer vorbestimmten Lage gehalten werden und beim Ausziehen des Gurtes nach unten zu den jeweiligen Gurtschlössern gezogen und in diese eingerastet werden.

Während die Mittelsitze der Rücksitzbänke handelsüblicher Personenkraftwagen in den vergangenen Jahren zumeist nur mit Beckengurten ausgestattet waren, ist nunmehr eine Tendenz erkennbar, aus Sicherheitsgründen auch diese Sitze mit Dreipunkt-Automatikgurten auszustatten. Diese Automatikgurte sind auf einer Aufwickelvorrichtung aufgewickelt, die entweder am oder im Dachhimmel oberhalb des Sitzes (z.B. JP 63-130448 A bzw. FR 2 701 906 A) oder an anderer Stelle des Kraftfahrzeugs (z.B. DE 199 01 784 A1 und DE 44 15 635 A1) untergebracht sind, von wo aus der Sicherheitsgurt im zuletzt genannten Fall zu einer oberhalb des Sitzes am Dachhimmel angeordneten Umlenkvorrichtung geführt ist. Diese bekannten Automatikgurte weisen zwei Schließzungen auf, die, solange der Sicherheitsgurt nicht benötigt wird, oberhalb des Sitzes am Dachhimmel oder über einer benachbarten Türsäule so gehalten werden, dass sie von dem auf dem Mittelsitz sitzenden Fahrzeuginsassen leicht ergriffen werden können, um den Sicherheitsgurt auszuziehen und die beiden Schließzungen in beiderseits des Mittelsitzes angeordnete Gurtschlösser einzurasten.

Zur Aufnahme der nicht benötigten Schließzungen werden diese entweder in einer verschließbaren Aufnahme am Dachhimmel oder an einer der Türsäulen verstaut (z.B. Fr 2 701 906 A oder DE 199 01 784 A1) oder alternativ dazu an einer nach unten über den Dachhimmel überstehenden Befestigungsvorrichtung befestigt. Eine solche unterhalb des Dachhimmels angebrachte Befestigungsvorrichtung für die beiden Schließzungen des Sicherheitsgurtes ist aus der gattungsbildenden EP 0 769 432 A1 bekannt, die eine Schließzungenanordnung der eingangs genannten Art offenbart, deren Einrastenden in entgegengesetzte Richtungen weisen. Bei dieser Schließzungenanordnung wird die obere der beiden Schließzungen von einer mit der unteren Schließzunge verbundenen Trägerplatte gegen den Dachhimmel gedrückt, während die untere Schließzunge von einem in der Nähe am Dachhimmel befestigten Magneten gehalten wird, dessen Anziehungskraft das stählerne vordere Einrastende dieser Schließzunge leicht lösbar gegen den Dachhimmel zieht. Beim Ablegen des Gurtes werden die beiden Schließzungen infolge der Gurtzugkraft nach oben zum Dachhimmel gezogen, wo die Trägerplatte der unteren Schließzunge infolge der Gurtzugkraft um ihr gerundetes hinteres Endes verschwenkt wird, was die untere Schließzunge in Berührung mit dem Magneten bringen soll.

Diese bekannte Schließzungenanordnung weist jedoch eine Reihe von Nachteilen auf: Um die untere Schließzunge bei aufgewickeltem Gurt nach oben gegen den Magneten zu schwenken, wird eine nicht unbeträchtliche Gurtzugkraft benötigt. Die bei aufgewickeltem Gurt auf die untere Schließzunge einwirkende Gurtzugkraft kann jedoch bei niedrigen Umgebungstemperaturen infolge geringerer Viskositäten der verwendeten Schmiermittel im Lager der Aufwickelvorrichtung oder infolge eines Schräglaufs oder Verschränkens des Gurtes abnehmen, wodurch die Schließzunge nicht mehr automatisch gegen den Magneten gezogen wird. Die Schließzunge baumelt dann infolge der Gewichtskraft ihres metallischen Einrastendes vom Dachhimmel herab, wie in Fig. 4 der EP 0 769 432 A1 dargestellt, was bei einem scharfen Abbremsen des Fahrzeugs oder bei Unfällen infolge einer trägheitsbedingten Beschleunigung dieser Schließzunge und ihres nicht unerheblichen Gewichts unter ungünstigen Umständen zu Verletzungen von Fahrzeuginsassen führen kann. Außerdem kann es dann bei abgelegtem Gurt zum Auftreten von Klappergeräuschen kommen, wenn die beiden lose am Gurtende hängenden Schließzungen infolge von Vibrationen des Fahrzeugs gegeneinander schlagen. Auch unter ästhetischen Gesichtspunkten wird dies als nachteilig angesehen.

Ausgehend hiervon liegt der Erfindung die Aufgabe zugrunde, eine Schließzungenanordnung der eingangs genannten Art dahingehend zu verbessern, dass ein Herabbaumeln von einer oder beiden Schließzungen vom Dachhimmel und/oder Klappergeräusche ohne zusätzliche Hilfsmittel wie Befestigungseinrichtungen oder verschließbare Taschen sicher vermieden werden.

Diese Aufgabe wird erfindungsgemäß durch die Merkmale des Patentanspruchs 1 gelöst. Vorteilhafte Weiterbildungen ergeben sich aus den Unteransprüchen.

Die erfindungsgemäße Schließzungenanordnung für einen Kraftfahrzeug-Sicherheitsgurt erstreckt sich in ausgezogenem Zustand von einer am Dachhimmel eines Kraftfahrzeugs angeordneten Umlenk- oder Aufwickelvorrichtung nach unten zu zwei beiderseits eines Sitzes angeordneten Gurtschlössern, wobei der Sicherheitsgurt zwei Schließzungen aufweist, die bei aufgewickeltem Sicherheitsgurt am Dachhimmel nahe beieinander in einer vorbestimmten Lage gehalten werden und beim Ausziehen des Gurtes nach unten zu den jeweiligen Gurtschlössern gezogen und in diese eingerastet werden, wobei sich der gemeinsamer Schwerpunkt der beiden Schließzungen in einer Ebene befindet, die von einem vertikalen Gurtabschnitt aufgespannt wird, sodass sich zumindest die untere der Schließzungen bei frei nach unten hängendem Gurt von selbst im Wesentlichen horizontal ausrichtet.

Eine erste Erfindungsvariante sieht vor, dass sich die beiden Schließzungen bei aufgerolltem Sicherheitsgurt einzeln oder als System in Bezug zu einem von den Schließzungen nach oben zur Umlenk- oder Aufwickelvorrichtung verlaufenden Abschnitt des Sicherheitsgurtes im Wesentlichen die Waage halten. Diese Maßnahmen haben zur Folge, dass die beiden Schließzungen auch ohne lösbare Befestigung am Dachhimmel im Wesentlichen horizontal ausgerichtet bleiben, da infolge der Balance kein Drehmoment auf die beiden Schließzungen einwirkt, das eine Bewegung aus der Horizontalen heraus zur Folge hat.

Ein gleichmäßiges Andrücken der Schließzungen beiderseits des Sicherheitsgurtes gegen den Dachhimmel oder eine am Dachhimmel vorgesehene Halterung wird gemäß einer bevorzugten Ausgestaltung der ersten Erfindung dadurch erreicht, dass die beiden Schließzungen allein unter der Einwirkung der vom Sicherheitsgurt auf die Schließzungen ausgeübten Zugkraft, ihres Eigengewichts sowie ggf. der vom Dachhimmel oder der Halterung auf eine oder beide Schließzungen ausgeübten Reaktionskräfte beiderseits des von den Schließzungen nach oben zur Umlenk- oder Aufwickelvorrichtung verlaufenden Gurtabschnitts gegen den Dachhimmel anliegend festgehalten werden, wenn sie vom Sicherheitsgurt gegen den Dachhimmel oder die Halterung gezogen werden. Diese Ausgestaltung ist besonders vorteilhaft, wenn die Halterung in Form einer Aufnahmemulde im Dachhimmel ausgebildet ist und durch diese Merkmale ohne zusätzliche Haltemittel oder verschließbare Taschen wie beim Stand der Technik vermieden wird, dass eine oder beide Schließzungen nach unten hängen oder über die unteren Ränder der Aufnahmemulde überstehen. Demgegenüber ist jedoch insbesondere bei einer nach unten über den Dachhimmel überstehenden Halterung auch eine zusätzliche Befestigung durch einen in die Halterung integrierten Permanentmagneten denkbar, ähnlich wie beim Gegenstand der eingangs genannten EP 0 769 432 A1.

Eine bevorzugte Ausgestaltung der Erfindung sieht vor, dass die Schließzungen beiderseits des nach oben verlaufenden Sicherheitsgurtes mit im Wesentlichen gleicher Kraft gegen den Dachhimmel oder die Halterung gezogen werden, so dass sich Schwankungen der Gurtkraft, zum Beispiel infolge von Temperaturänderungen nicht durch eine Lageänderung der beiden Schließzungen bemerkbar machen.

Alternativ dazu kann jedoch auch vorgesehen werden, dass eine oder beide Schließzungen schräg geneigt ist, wenn sie frei am unteren Ende des Sicherheitsgurtes hängen, und auf der nach oben weisenden Seite zuerst gegen den Dachhimmel oder die Halterung anschlagen, wobei die Zugkraft des Gurtes und die vom Dachhimmel oder der Halterung auf das anschlagende Ende ausgeübte Reaktionskraft dann bewirken, dass die Schließzungen um das untere Ende des Gurtes verschwenkt werden, bis sie auch auf der gegenüberliegenden Seite des Gurtes gegen den Dachhimmel oder die Halterung anliegen.

Um erstens zu verhindern, dass die beiden am Gurtende hängenden Schließzungen bei ganz oder teilweise aufgewickeltem Gurt in Bezug zueinander und in Bezug zum Gurtende verrutschen und dadurch aus der Waage geraten, um zweitens die Schließzungen klapperfrei am Gurtende zu halten, und um drittens den Bedienungskomfort zu verbessern, sieht eine weitere Variante oder bevorzugte Ausgestaltung der Erfindung vor, dass mindestens eine der beiden Schließzungen mit einem Permanentmagneten versehen ist, der einen aus magnetischem oder magnetisierbarem Material bestehenden Teil der anderen Schließzunge und vorzugsweise ihren aus ferromagnetischem Stahl bestehenden Kern anzieht, um die Schließzungen in Bezug zueinander in einer vorbestimmten Lage zu halten.

Während die untere der beiden Schließzungen des Schließzungensystems zweckmäßig fest mit dem Ende des Sicherheitsgurtes verbunden ist, weist die obere der beiden Schließzungen vorzugsweise eine Gurtöse oder Durchtrittsöffnung für den Sicherheitsgurt auf, so dass sie frei auf dem Gurt verschiebbar ist. Gemäß einer weiteren bevorzugten Ausgestaltung der Erfindung überlappen sich die Schließzungen bei aufgewickeltem Sicherheitsgurt in entgegengesetzter oder gleicher Ausrichtung.

Um die Schließzungen einzeln in Bezug zum Gurt in die Waage zu bringen, ist gemäß einer vorteilhaften Ausgestaltung der Erfindung vorgesehen, dass der Gurt im Wesentlichen im Schwerpunkt jeder Schließzunge angreift und dass die Schwerpunkte beider Gurte im Wesentlichen in einer vom vertikalen Gurt aufgespannten Ebene übereinander liegen. Da die vorderen Einrastenden der Schließzungen gewöhnlich schwerer als die hinteren Griffenden der Schließzungen sind, können die auf der entgegengesetzten Seite des Gurtes angeordneten hinteren Griffenden der Schließzungen durch ein Metallgewicht oder dergleichen beschwert werden, um den Schwerpunkt jeder Schließzunge in die Nähe von deren Mitte zu verschieben.

Um das aus den beiden Schließzungen bestehende Schließzungensystem in Bezug zum Gurt in die Waage zu bringen, kann jedoch auch vorgesehen werden, nur den gemeinsamen Schwerpunkt des Schließzungensystems in die vom vertikalen Gurtabschnitt aufgespannte Ebene zu bringen, während sich die Schwerpunkte der einzelnen Schließzungen beiderseits dieser Ebene befinden können. Gerade in diesem Fall ist es besonders vorteilhaft, wenn die beiden Schließzungen durch magnetische Anziehungskräfte in einer vorbestimmten Lage zu einem starren Schließzungensystem mit definiertem Schwerpunkt gekoppelt werden.

Statt durch Verwendung eines in eine der Schließzungen integrierten Permanentmagneten zur Kopplung der beiden Schließzungen bzw. zusätzlicher Gewichte in den zu den Einrastenden entgegengesetzten hinteren Enden der Schließzungen kann ein Ausbalancieren des Schließzungensystems als Ganzes gemäß einer weiteren bevorzugten Ausgestaltung der Erfindung auch dadurch erreicht werden, dass der von der Umlenk- oder Aufrollvorrichtung nach unten zur unteren Schließzunge verlaufende Sicherheitsgurt nach dem Hindurchtritt durch die Gurtöse in der oberen Schließzunge an einer Umlenkeinrichtung der unteren Schließzunge umgelenkt wird, die entgegen der Kraft einer Feder in der unteren Schließzunge von deren Einrastende weg verschiebbar ist und vorzugsweise von einer drehbar und längsverschiebbar in der unteren Schließzunge gelagerten Rolle oder Hülse gebildet wird. Durch geeignete Wahl der Federkraft bzw. durch eine geeignete Federkennlinie kann unabhängig von der Lage der Schwerpunkte innerhalb der beiden Schließzungen sichergestellt werden, dass sich die untere Schließzunge bei aufgewickeltem Sicherheitsgurt von selbst in eine Position verschiebt, in welcher der Schwerpunkt des Gesamtsystems in der vom Sicherheitsgurt aufgespannten Ebene liegt.

Bei Verwendung gebräuchlicher Schließzungen, deren vordere Einrastenden schwerer als die entgegengesetzten hinteren Griffenden sind, kann alternativ dazu auch vorgesehen sein, dass die Schließzungen in entgegengesetzter Ausrichtung vom Gurt gehalten werden, wie an sich bereits bekannt, und dass das schwerere vordere Einrastende der oberen Schließzunge auf dem leichteren hinteren Ende der unteren Schließzunge aufliegt und dieses mit einer solchen Kraft nach unten drückt, dass die untere Schließzunge eine im wesentlichen horizontale Ausrichtung erhält. Dies kann zweckmäßig bereits bei frei am Gurt hängendem Schließzungensystem der Fall sein, oder alternativ erst dann, wenn dieses durch die Gurtkraft gegen den Dachhimmel oder die Halterung gezogen wird und zusätzliche Reaktionskräfte entgegen der Gurtkraft vom Dachhimmel oder der Halterung auf eine oder beide Schließzungen einwirken.

Eine dritte Erfindungsvariante oder bevorzugte Ausgestaltung der anderen Varianten sieht vor, dass die beiden Schließzungen in gleicher Ausrichtung gegen den Dachhimmel oder die am Dachhimmel angeordnete Halterung gezogen werden, mit anderen Worten so, dass ihre Einrastenden in die gleiche Richtung weisen. Durch diese Maßnahme wird erreicht, dass beim Anlegen des Gurtes die untere der beiden Schließzungen vor dem Einrasten in ihr zugehöriges Gurtschloss nicht um 180 Grad in Bezug zur oberen Schließzunge gedreht werden muss, so dass das Schließzungensystem als Einheit vom Dachhimmel nach unten gezogen werden, um dann kurz vor dem Einrasten der unteren Schließzunge die beiden Schließzungen entgegen der magnetischen Anziehungskraft des in eine Schließzunge integrierten Magneten voneinander zu lösen.

Um eine Fehlbedienung durch Verwechslung der beiden Schließzungen zu vermeiden, sind diese gemäß einer weiteren vorteilhaften Ausgestaltung der Erfindung codiert, so dass sich in jedem der beiden Gurtschlösser nur diejenige Schließzunge verrasten lässt, die für dieses Gurtschloss vorgesehen ist. Vorzugsweise ist zudem auf einer oder beiden Schließzungen ein Piktogramm vorgesehen, das die Bedienung für unerfahrene Benutzer erleichtert.

Im folgenden wird die Erfindung anhand einiger in der Zeichnung dargestellter Ausführungsbeispiele näher beschreiben. Es zeigen:
- Fig. 1 und 2:: in perspektivischer Vorderseitenansicht bzw. in perspektivischer Seitenansicht einen Innenraum eines Kleinbusses, dessen Mittelsitze mit Sicherheitsgurten ausgestattet sind, die über eine am Dachhimmel angeordnete Umlenkvorrichtung nach unten zu zwei neben den Mittelsitzen angeordneten Gurtschlössern gezogen werden und eine erfindungsgemäße Schließzungenanordnung aufweisen;
- Fig. 3:: eine teilweise geschnittene Seitenansicht einer ersten erfindungsgemäßen Schließzungenanordnung frei am Gurtende hängend;
- Fig. 4:: eine teilweise geschnittene Seitenansicht der Schließzungenanordnung aus Fig. 2, die gegen eine als Aufnahmemulde ausgebildete Halterung am Dachhimmel anliegt;
- Fig. 5:: eine Unterseitenansicht der Schließzungenanordnung aus Fig. 4;
- Fig. 6:: eine vertikale seitliche Schnittansicht durch eine andere erfindungsgemäße Schließzungenanordnung frei am Gurtende hängend;
- Fig. 7:: eine teilweise geschnittene Draufsicht von oben auf die untere Schließzunge der Schließzungenanordnung aus Fig. 6;
- Fig. 8:: eine teilweise geschnittene Seitenansicht einer noch anderen erfindungsgemäßen Schließzungenanordnung frei am Gurtende hängend;
- Fig. 9:: eine Draufsicht von oben auf eine weitere frei am Gurtende hängende erfindungsgemäße Schließzungenanordnung;
- Fig. 10:: eine Schnittsansicht entlang der Linie X-X der Fig. 9;
- Fig. 11:: eine Draufsicht von oben auf eine noch weitere frei am Gurtende hängende erfindungsgemäße Schließzungenanordnung;
- Fig. 12:: eine Seitenansicht der Schließzungenanordnung aus Fig. 11;
- Fig. 13:: eine teilweise geschnittene Seitenansicht der Schließzungenanordnung aus Fig. 11, die gegen eine nach unten über den Dachhimmel überstehende Halterung anliegt.

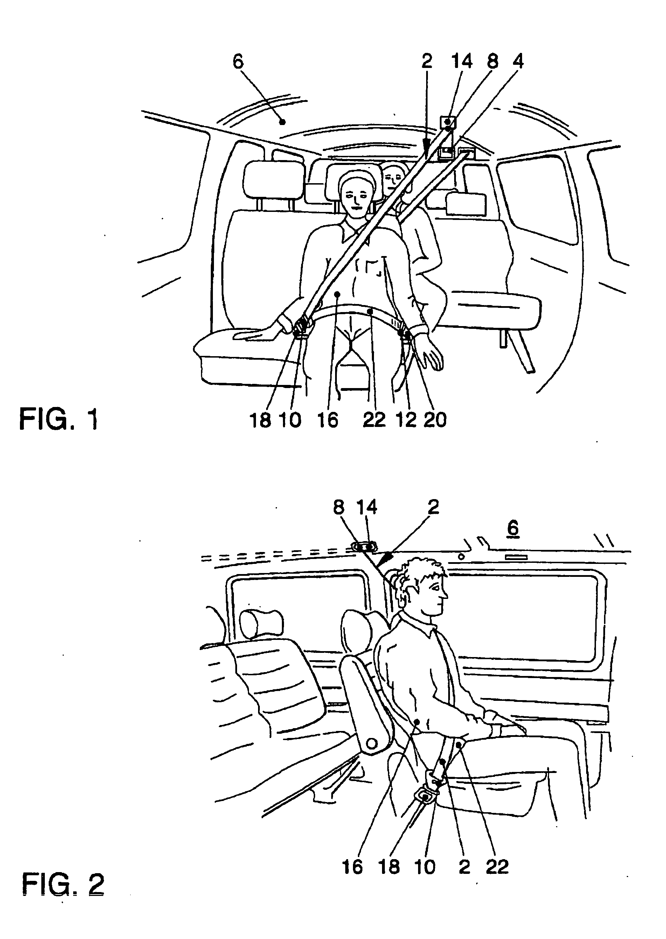

Die Figuren 1 und 2 zeigen einen Kleinbus, dessen einer Mittelsitz mit einem Dreipunkt-Automatik-Sicherheitsgurt 2 ausgestattet ist. Dieser Sicherheitsgurt 2 erstreckt sich von einer am hinteren oberen Ende der Fahrgastzelle angeordneten Aufwickelvorrichtung 4 in einem Hohlraum oberhalb eines Dachhimmels 6 des Kleinbusses bis zu einer hinter und über dem Mittelsitz angeordneten Umlenkvorrichtung 8, wo sein freies, mit zwei Schließzungen 10, 12 versehenes Ende bei vollständig aufgewickeltem Gurt 2 in einer Aufnahmemulde 14 am Dachhimmel 6 gehalten wird, so dass es von einem auf dem jeweiligen Mittelsitz sitzenden Fahrzeuginsassen 16 ergriffen und nach unten gezogen werden kann, um die beiden Schließzungen 10, 12 jeweils in einem von zwei beiderseits des Sitzes angeordneten Gurtschlössern 18, 20 einzurasten. Der ausgezogene Sicherheitsgurt 2 erstreckt sich dann ausgehend von einem der beiden Gurtschlösser 20 als Beckengurt 22 zum anderen Gurtschloss 18 und von dort nach oben zu der oberhalb der Aufnahmemulde 14 im Dachhimmel angeordneten Umlenkvorrichtung 8.

Von den beiden Schließzungen 10, 12 ist eine fest mit dem freien Ende des Sicherheitsgurtes 2 verbunden, während die andere auf dem Gurt 2 verschiebbar ist, so dass die beiden Schließzungen 10, 12 bei ausgezogenem Gurt 2 im Abstand voneinander in den Gurtschlössern 18, 20 eingerastet und bei aufgewickeltem Gurt 2 nahe beieinander in der Aufnahmemulde 14 untergebracht werden können.

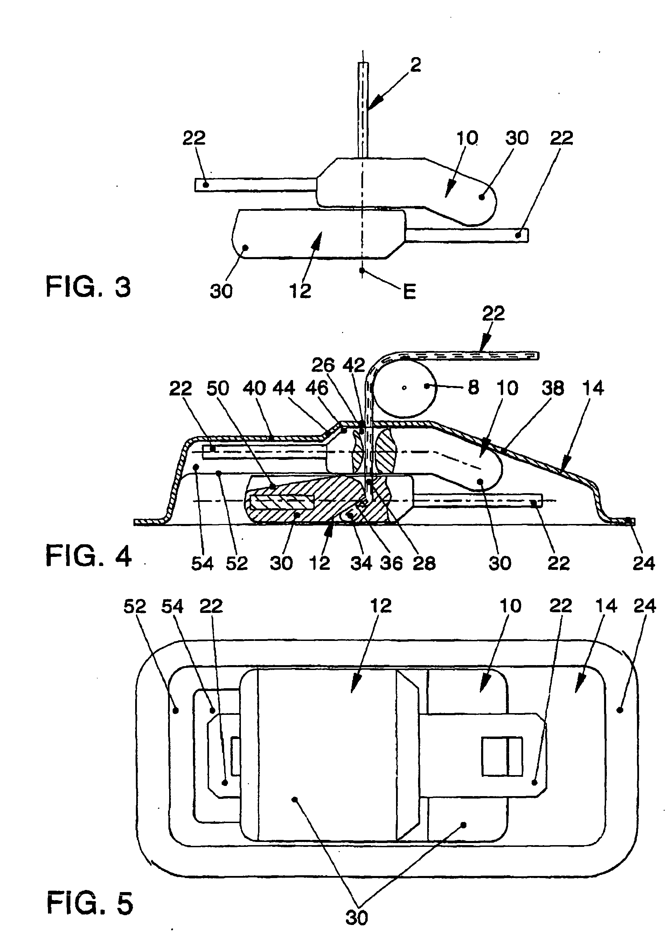

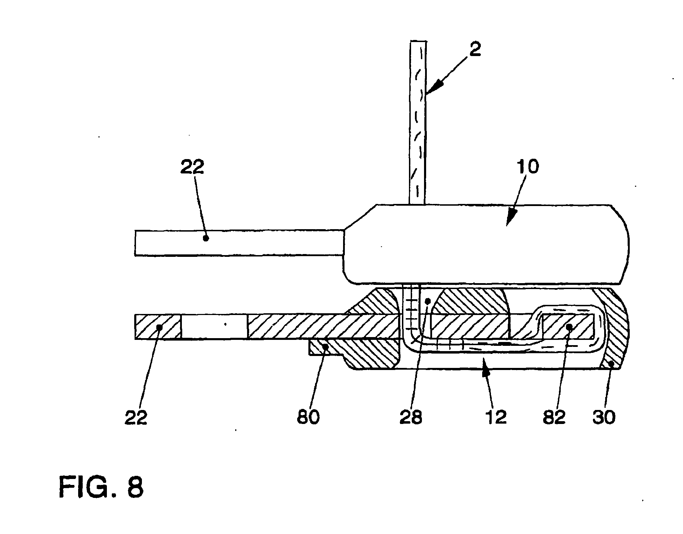

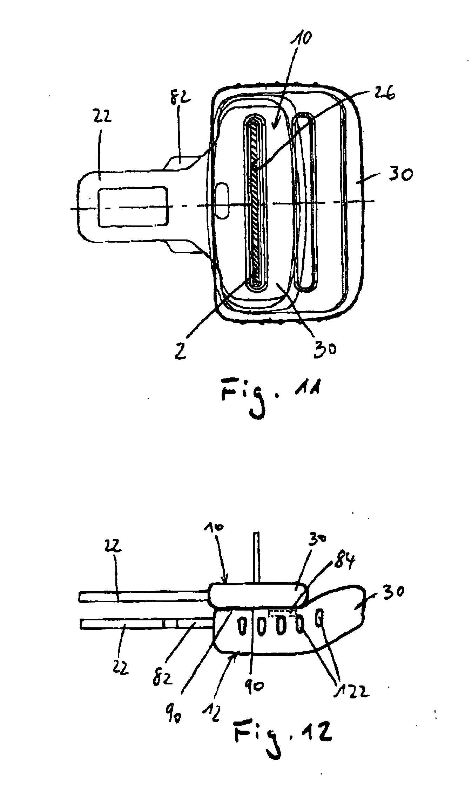

Wie am besten in den Figuren 3 bis 13 dargestellt, können die beiden Schließzungen 10, 12 so am Gurt 2 angebracht werden, dass die in die Gurtschlösser 18, 20 einführbaren Einrastenden 22 ihres aus Stahl bestehenden Kerns entweder in die gleiche Richtung (Figuren 8 bis 10) oder in entgegengesetzte Richtungen (Figuren 3 bis 7) weisen.

Um zu vermeiden, dass das ästhetische Erscheinungsbild des Innenraums des Kleinbusses durch Befestigungseinrichtungen für die Schließzungen 10, 12 am Dachhimmel 6 oder durch nach unten hängende, über den unteren Rand 24 der Aufnahmemulde 14 überstehende Schließzungen 10, 12 beeinträchtigt wird und auch um eine dadurch ggf. verursachte Verletzungsgefahr für die Fahrzeuginsassen zu vermeiden, sind die beiden Schließzungen 10, 12 so am Sicherheitsgurt 2 angebracht, dass sie bei aufgewickeltem Gurt 2 allein durch die Gurtkraft vollständig in die Aufnahmemulde 14 gezogen werden, wo sie entgegen ihrer Schwerkraft allein durch die Gurtkraft gehalten werden.

Die auf dem Gurt verschiebbare, in der Aufnahmemulde 14 oben liegende Schließzunge 10 weist eine Gurtöse oder Durchtrittsöffnung 26 für den Sicherheitsgurt 2 auf, die beim automatischen Aufwickeln des Gurtes 2 und bei der Bewegung der beiden Schließzungen 10, 12 in die Aufnahmemulde 14 durch das Straffen des Gurtes 2 genau über einer Austrittstelle 28 des Gurtes 2 aus der in der Aufnahmemulde 14 unten liegenden Schließzunge 12 zu liegen kommt.

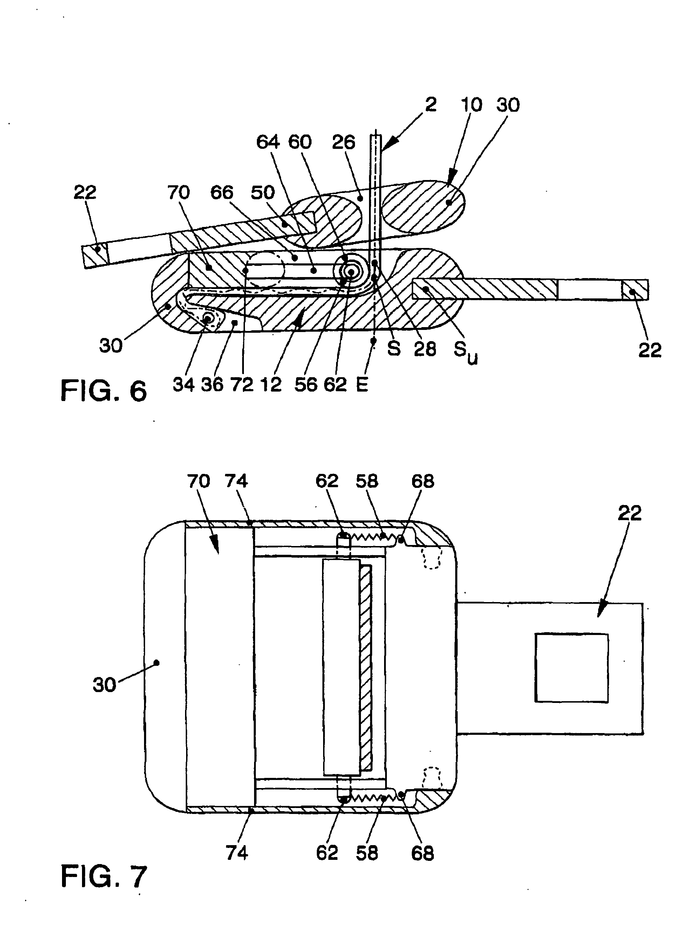

Die beiden Schließzungen 10, 12 sind im Hinblick auf ihre Gewichtsverteilung so austariert, dass sie sich bei vollständig aufgewickeltem (Fig. 4) und vorzugsweise auch bei frei nach unten hängendem Gurt 2 (Fig. 2 und 6) beiderseits des Gurtes 2 die Waage halten, das heißt, dass sich ihre vorderen Einrastenden 22, mindestens jedoch das vordere Einrastende 22 der unteren Schließzunge 12 von selbst im Wesentlichen horizontal ausrichten.

Bei dem Schließzungensystem 10, 12 in den Figuren 3 bis 5 wird dies dadurch erreicht, dass die untere der beiden Schließzungen 12 in Bezug zur Austrittsstelle 28 des Gurtes 2 und die obere Schließzunge 10 in Bezug zur Mitte der Gurtöse 26 so austariert werden, dass die vorderen Einrastenden 22 und die entgegengesetzten hinteren Griffenden 30 der Zungen 10, 12 rechts bzw. links von einer gedachten Ebene E durch das vertikale Ende des Gurtes (Fig. 3 und 6) das gleiche Gewicht aufweisen. Wie in Fig. 6 im Schnitt für die untere Schließzunge 12 angedeutet, kann dazu bei der Herstellung ein Metallstück 32 in das Griffende 30 der Schließzungen 10, 12 eingebettet werden, das dem metallischen Einrastende 22 in Bezug zum Gurt 2 die Waage hält. Das freie Ende des Gurtes 2 ist bei den dargestellten Ausführungsbeispielen durch Umnähen um einen dünnen Metallstab 34 keilförmig verdickt und wird durch die Zugkraft des Gurtes in eine entsprechend geformte keilförmige Ausnehmung 36 auf der zur Austrittstelle 28 entgegengesetzten Unterseite der Schließzunge 12 gezogen.

Da bei frei hängendem Gurt 2 schon geringe Verschiebungen der Schließzungen 10, 12 in Bezug zueinander bzw. in Bezug zum Gurt 2 eine Kippbewegung des Schließzungensystems 10, 12 nach einer Seite hervorrufen, zum Beispiel infolge des vorhandenen Spiels des Gurtes 2 in der Gurtöse 26, wird die horizontale Ausrichtung des Systems 10, 12 in der Aufnahmemulde 14 durch eine an die Schließzungen 10, 12 angepasste Form der letzteren gefördert, die einer Verschiebung der Schließzungen 10, 12 aus der gewünschten austarierten Lage entgegenwirkt. Das heißt, die Aufnahmemulde 14 ist so geformt, dass die obere Schließzunge 10 über eine größere Strecke beiderseits der Gurtöse 26 gegen die Aufnahmemulde 14 anliegt, und dass die untere Schließzunge 12 über eine größere Strecke beiderseits der Gurtaustrittsstelle 28 gegen die obere Schließzunge 10 und/oder gegen die Aufnahmemulde 14 anliegt. In diesem Fall bewirken die der Gurtzugkraft entgegenwirkenden, beiderseits des vertikalen Gurtabschnitts 2 von der Aufnahmemulde 14 auf die Schließzungen 10, 12 ausgeübten Reaktionskräfte, dass sich das Schließzungensystem 10, 12 in der Mulde 14 die Waage hält und im Falle einer vorherigen leichten Schräglage in die in Fig. 4 dargestellte horizontale ausgewogene Lage verschwenkt wird, wenn das nach oben weisende Ende zuerst gegen die Mulde 14 anschlägt. Die Mulde 14 ist zudem so geformt, dass die Unterseite der unteren Schließzunge 12 im wesentlichen mit dem unteren Rand 24 der Mulde 14 bündig ist.

Um die genannten Bedingungen zu erfüllen, weist die obere 10 der beiden in den Figuren 3 bis 5 dargestellten Schließzungen 10, 12 ein abgeknicktes hinteres Griffende 30 auf, dessen Oberseite gegen einen komplementären schrägen Teil 38 der Mulde 14 gezogen wird, so dass sein gerundetes Ende einen Anschlag für das Einrastende 22 der unteren Schließzunge 12 bildet. Das Einrastende 22 der oberen Schließzunge 10 wird vom Gurt 2 gegen einen Teil 40 der Mulde 14 gezogen, der in Bezug zu einem über der Gurtöse 26 angeordneten horizontalen Teil 42 etwas nach unten versetzt ist, so dass dieses Einrastende 22 vom Gurt 2 gegen diesen Teil 40 der Mulde 14 gezogen wird. Der schräge Teil 38 der Mulde 14 und eine weitere entgegengesetzte Schräge 44 zwischen den beiden Teilen 40, 42 wirken mit dem schrägen Griffende 30 der oberen Schließzunge 10 bzw. mit einer komplementären Schräge 46 zwischen dem Einrastende 22 und dem Griffende 30 dieser Schließzunge 10 zusammen, um die vorgesehene genaue Positionierung der Schließzunge 10 zu erleichtern.

Die untere 12 der beiden Schließzungen 10, 12 weist ein gerades hinteres Griffende 30 auf, dessen Oberseite in der Mitte eine nach hinten und unten geneigte Schräge 50 aufweist, um das Einführen der Finger eines Benutzers zwischen das darüber angeordnete Einrastende 30 der oberen Schließzunge 10 und die Oberseite des Griffendes 30 der unteren Schließzunge 12 zu erleichtern. Beiderseits der Mitte liegt das Griffende 30 der unteren Schließzunge 12 gegen einen teilweise um die Mulde 14 umlaufenden Sims oder Vorsprung 52 an, der gegenüber dem Muldenteil 40 parallel nach unten zu versetzt ist und eine schmalere Einbuchtung 54 für das Einrastende 22 der oberen Zunge 10 begrenzt.

Das in den Figuren 6 und 7 dargestellte Schließzungensystem 10, 12 weist gegenüber dem zuvor beschriebenen System zwei voneinander unabhängige Unterschiede auf. Zum einen befinden sich die Schwerpunkte So und Su der oberen und der unteren Schließzunge 10 bzw. 12 nicht in der vom vertikalen Gurtabschnitt 2 aufgespannten Ebene E sondern im Abstand links bzw. rechts derselben, wobei die Abstände der Schwerpunkte So und Su von der Ebene E und das jeweilige Gewicht (das sowohl gleich als auch unterschiedlich sein kann) der einzelnen Schließzungen 10, 12 so aneinander angepasst sind, dass sich das System 10, 12 frei hängend die Waage hält. Das heißt, der gemeinsame Schwerpunkt S beider Schließzungen 10, 12 befindet sich ebenfalls in der Ebene E. Bei dem in Fig. 6 dargestellten, an einem vertikalen Gurtende 2 hängenden Schließzungensystem 10, 12 liegt beispielsweise das schwerere Einrastende 22 der oberen Schließzunge 10 auf dem leichteren Griffende 30 der unteren Schließzunge 12 auf und drückt dieses nach unten, so dass die unteren Schließzunge 12 eine horizontale Ausrichtung aufweist. Leichte Gewichtsverlagerungen und eine dadurch hervorgerufene Schräglage des Systems können wie bei dem oben beschriebenen Beispiel durch eine entsprechend angepasste Form der Aufnahmemulde 14 ausgeglichen werden, so dass zumindest innerhalb der Mulde für eine genaue Ausrichtung der unteren Schließzunge 12 mit dem Rand 24 der Mulde 14 gesorgt ist.

Zum anderen ist der Gurt 2 innerhalb der unteren Schließzunge 12 um eine Umlenkrolle 56 herum geführt, die entgegen der Kraft zweier Federn 58 in Längsrichtung der Schließzunge 12 von deren Einrastende 22 weg verschiebbar ist. Die Federkraft ist so gewählt, dass sich die Umlenkrolle 56 in der in Fig. 7 dargestellten rechten Endstellung befindet, wenn der Gurt 2 aufgewickelt ist und eine im Verhältnis geringere Gurtkraft das Schließzungensystem 10, 12 in die Aufnahmemulde 14 zieht, während sie sich in der strichpunktiert dargestellten linken Endstellung befindet, wenn die Schließzunge 12 im Gurtschloss 20 eingerastet ist und die Gurtkraft bei ausgezogenem Gurt im Verhältnis größer ist. Mit Hilfe der verschiebbaren federbelasteten Umlenkrolle 56 kann so eine Austarierung der unteren Schließzunge 12 bzw. des Schließzungensystems 10 mit Hilfe zusätzlicher Gegengewichte für die schwereren Einrastenden 22 vermieden werden. Durch die Verschiebung der Gurtaustrittsstelle 28 weg vom hinteren Griffende 30 der unteren Schließzunge 12 stützt dieses letztere zudem das Einrastende 22 der oberen Schließzunge 10 in einem größeren Abstand von der Gurtöse 26 und in größerer Nähe von deren schwererem vorderen Einrastende 22 ab, so dass es leichter ist, das Schließzungensystem 10, 12 insgesamt in die Waage zu bringen.

Wie in Fig. 6 und 7 dargestellt, besteht die Umlenkrolle 56 im Wesentlichen aus einer metallischen Hülse 60, die auf eine über die Stirnenden der Hülse überstehende metallische Achse 62 aufgeschoben ist. Die überstehenden Stirnenden der Achse 62 gleiten in horizontalen Längsschlitzen 64 zweier in die Schließzunge 12 eingebetteter Metallführungen 66, die an ihrem vom Einrastende 22 abgewandten Ende offen sind, so dass sich die Stirnenden der Achse 62 in die Schlitze 64 einführen lassen. An den nach außen über die Führungen 66 überstehenden Stirnenden der Achse 62 ist jeweils eine der als Zugfedern ausgebildeten Federn 58 eingehakt, die sich in Richtung des Einrastendes 22 der Zunge 12 erstrecken und nahe demselben an einem Vorsprung 68 der Schließzunge 12 verankert ist. Hinter dem offenen Einführende der Führungen 66 ist ein Widerlager 70 in eine Aussparung der Schließzunge 12 eingeclipst, das die offenen Enden der Führungen 66 verschließt und einen konkav gerundeten Anschlag 72 für die Umlenkrolle 56 in deren zweiter Endstellung bildet. Zwei seitlich aufgeclipste Deckel 74 bedecken die Zugfedern 58 und die überstehenden Stirnenden der Achse 62.

Um Verwechslungen der beiden Schließzungen 10, 12 beim Einführen in die zugehörigen Gurtschlösser 18, 20 zu vermeiden, sind die beiden Schließzungen 10, 12 bei den in den Figuren 8 bis 13 dargestellten Schließzungensystemen 10, 12 mit einer sogenannten "Verschlüsselung" oder "Codierung" versehen, die ein Einführen einer Schließzunge 12, 10 in das "falsche" Gurtschloss 18, 20 verhindert. Diese Verschlüsselung kann beispielsweise aus einem Vorsprung 80, 82 auf der einen Schließzunge 12 bestehen, der ein Einführen dieser Schließzunge 12 in das "falsche" Gurtschloss 18 verhindert, oder umgekehrt aus einem Vorsprung auf der Schließzunge 10, der ein Einführen dieser Schließzunge 10 in das "falsche" Gurtschloss 20 verhindert. Bei dem in Fig. 8 dargestellten Schließzungensystem 10, 12 ist außerdem das fest mit der Schließzunge 12 verbundene Ende des Gurtes 2 nach dem Herumschlingen um einen Steg 82 des zum Gewichtsausgleich bis zum Griffende 30 der Schließzunge 12 verlängerten metallischen Kerns im Bereich der Gurtaustrittsstelle 28 mit dem Gurt 2 vernäht.

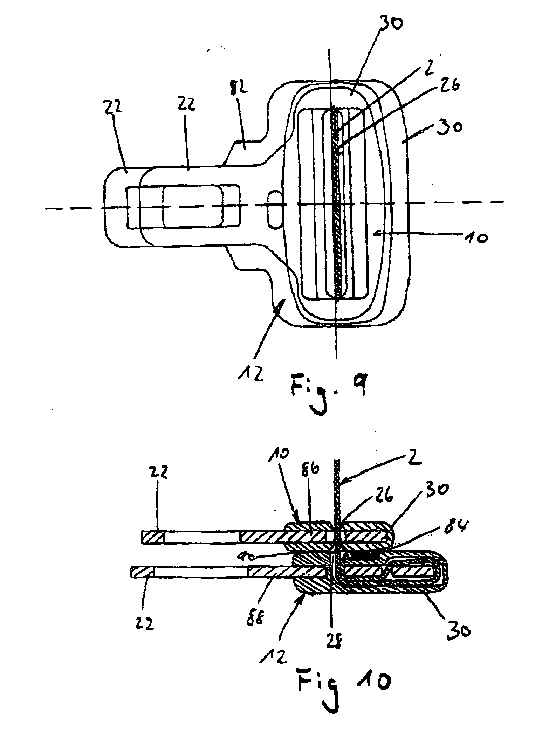

Um die beiden Schließzungen 10, 12 zwecks Vermeidung von Klappergeräuschen im Bereich des Dachhimmels 6 und zwecks Verbesserung des Bedienungskomforts während des Herabziehens des Schließzungensystems 10, 12 vom Dachhimmel 6 zusammenzuhalten, ist die untere Schließzunge 12 der in den Figuren 9 bis 13 dargestellten Schließzungensysteme 10, 12 in der Nähe ihrer Oberseite mit einem integrierten Permanentmagneten 84 versehen, dessen magnetische Anziehungskraft auf den Stahlkern 86 der oberen Schließzunge 10 ausreicht, um die beiden Schließzungen 10, 12 zusammenzuhalten. Der Permanentmagnet 84 ist plättchenförmig ausgebildet und so zwischen dem Stahlkern 88 der unteren Schließzunge 12 und deren Oberseite angeordnet, dass er einem Teil des Stahlkerns 86 der oberen Schließzunge 12 gegenüberliegt und seine Breitseitenflächen parallel zu einer Berührungsfläche 90 der beiden Schließzungen 10, 12 ausgerichtet sind. Wenn das Griffende 30 der unteren Schließzunge 12 durch Spritzgießen um den Stahlkern 88 und das Gurtende herum hergestellt wird, wird der Permanentmagnet 84 vorzugsweise in einem geringen Abstand von der Berührungsfläche 90 in das Kunststoffmaterial des Griffendes 30 eingebettet, so dass er nicht sichtbar ist, seine Anziehungskraft durch den Kunststoff jedoch nur wenig geschwächt wird. Bei einem durch HF-Verschweißen zweier Halbschalen hergestellten Griffende 30 wird der Permanentmagnet 84 hingegen vorzugsweise vor dem Verschweißen der beiden Halbschalen im Inneren der oberen Halbschale angebracht. Die beiden Schließzungen 10, 12 werden vom Magneten 84 in der Lage zusammengehalten, in der die Austrittsstelle 28 des Gurtes 2 aus der unteren Schließzunge 12 genau unterhalb der Gurtöse 26 der oberen Schließzunge 10 liegt.

Die gegenseitige Positionierung in dieser Lage kann noch dadurch verbessert werden, dass das Griffende 30 der unteren Schließzunge 12 nach oben oder das Griffende 30 der oberen Schließzunge 10 nach unten gebogen ist, wie in Fig. 12, 13 und 14 bzw. in Fig. 3 und 4 dargestellt, so dass eine Längsverschiebung der beiden Schließzungen 10, 12 entlang der Berührungsfläche 90 verhindert wird.

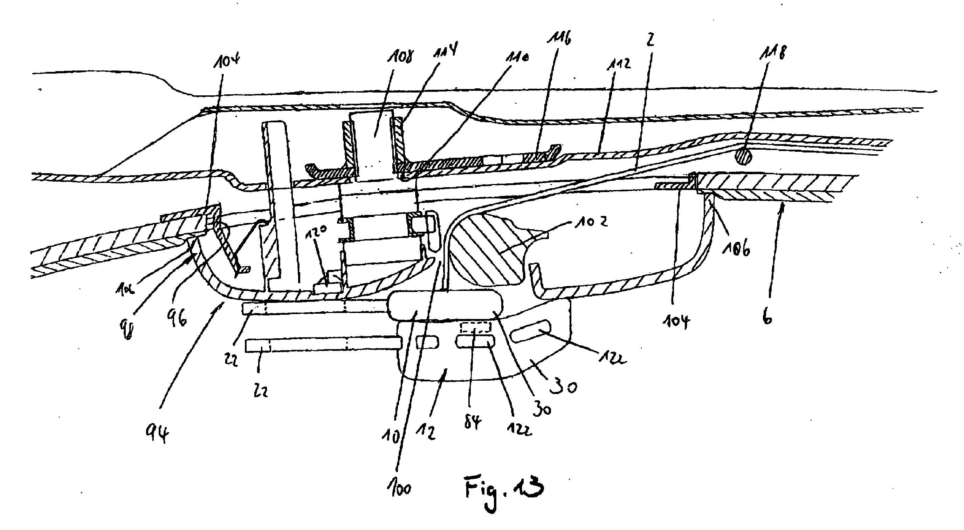

Statt mit einer Aufnahmemulde 14 für das Schließzungensystem 10, 12 ist der in Fig. 13 dargestellte Dachhimmel 6 mit einer nach unten überstehenden Halterung 94 versehen, die das Ergreifen der unteren Schließzunge 12 erleichtern soll. Die Halterung 94 besteht im Wesentlichen aus einem über einer Öffnung 96 im Dachhimmel 6 angeordneten flachen schalenförmigen Kunststoffgehäuse 98, das auf seiner Unterseite mit einer Schlitzöffnung 100 für den Gurt 2 und einem an die Schlitzöffnung 100 angrenzenden Umlenkbeschlag 102 versehen ist. Um die Öffnung 96 herum ist ein Verstärkungsrahmen 104 angebracht. Das Gehäuse 98 weist einen von unten her gegen den Dachhimmel 6 anliegenden umlaufenden Rand 106 auf und wird von einer Schraube 108 gehalten, die durch eine Öffnung 110 in einem über dem Dachhimmel 6 vorgesehenen Verstärkungsblech 112 hindurch in einen Gewindestutzen 114 einer von oben gegen das Verstärkungsblech 112 anliegenden Verstärkungsplatte 116 eingeschraubt ist. Der Umlenkbeschlag 102 lenkt den Sicherheitsgurt 2 durch die Öffnung 96 hindurch zu einer zwischen dem Verstärkungsblech 112 und dem Dachhimmel 6 angebrachten Gurtführung 118, über die der Gurt 2 dann zur Aufwickelvorrichtung 4 (nicht dargestellt) geführt wird.

Die Unterseite des Gehäuses 98 ist so geformt, dass das durch den Magneten 84 zusammengehaltene Schließzungensystem 10, 12, das bei vollständig aufgewickeltem Gurt 2 durch die Gurtzugkraft von unten her gegen die Halterung 94 gezogen wird, in seiner austarierten horizontalen Ausrichtung auf entgegengesetzten Seiten der Schlitzöffnung 100 gegen die Unterseite des Gehäuses 98 anliegt, und zwar auf einer Seite der Schlitzöffnung 100 mit dem Einrastende 22 der oberen Schließzunge 10 und auf der anderen Seite der Schlitzöffnung 100 mit dem nach oben gebogenen Griffende 30 der unteren Schließzunge 12. Bei Verwendung einer unteren Schließzunge 12 ohne nach oben gebogenes Griffende 30, wie in Fig. 10 dargestellt, wird bei entsprechender horizontaler Ausrichtung des Schließzungensystems 10, 12 das Griffende 30 der oberen Schließzunge 10 gegen den Umlenkbeschlag 102 gezogen. Das Einrastende 22 der oberen Schließzunge 10 wird zusätzlich durch einen kleinen Permanentmagneten 120 gehalten, der oberhalb ihres Einrastendes 22 auf der von der Fahrgastzelle her unsichtbaren Oberseite des schalenförmigen Kunststoffgehäuses 98 befestigt ist, so dass seine magnetische Anziehungskraft das aus ferromagnetischem Stahl bestehende Einrastende 22 nach oben gegen die Unterseite des Kunststoffgehäuses 98 zieht.

Um das Ergreifen der Schließzunge 12 zu erleichtern, ist deren Griffende 30 an den Seiten mit überstehenden Rippen 122 oder eingetieften Mulden versehen, die auch einem unerfahrenen Benutzer anzeigen, wo das Schließzungensystem 10, 12 am besten ergriffen werden soll. Zu diesem Zweck kann die untere Schließzunge 12 außerdem auf ihrer Unterseite mit einem aufgedruckten oder aufgeklebte Piktogramm versehen sein, das die Handhabung des Schließzungensystems 10, 12 erläutert.

## Patentansprüche

1. Schließzungenanordnung für einen Kraftfahrzeug-Sicherheitsgurt, der sich in ausgezogenem Zustand von einer am Dachhimmel eines Kraftfahrzeugs angeordneten Umlenk- oder Aufwickelvorrichtung nach unten zu zwei beiderseits eines Sitzes angeordneten Gurtschlössern erstreckt, wobei der Sicherheitsgurt zwei Schließzungen aufweist, die bei aufgewickeltem Sicherheitsgurt am Dachhimmel nahe beieinander in einer vorbestimmten Lage gehalten werden und beim Ausziehen des Gurtes nach unten zu den jeweiligen Gurtschlössern gezogen und in diese eingerastet werden, **dadurch gekennzeichnet, dass** sich der gemeinsame Schwerpunkt (S) der beiden Schließzungen (10, 12) in einer Ebene (E) befindet, die von einem vertikalen Gurtabschnitt (2) aufgespannt wird, sodass sich zumindest die untere der Schließzungen (10, 12) bei frei nach unten hängendem Gurt von selbst im Wesentlichen horizontal ausrichtet.

2. Schließzungenanordnung nach Anspruch 1, **dadurch gekennzeichnet, dass** ein schwereres vorderes Einrastende (22) einer oberen (10) der beiden Schließzungen (10, 12) auf einem leichteren hinteren Griffende (30) einer unteren (12) der beiden Schließzungen (10, 12) aufliegt und dieses mit einer solchen Kraft nach unten drückt, dass die untere Schließzunge (12) im wesentlichen horizontal ausgerichtet ist.

3. Schließzungenanordnung nach Anspruch 2, **dadurch gekennzeichnet, dass** ein schräg nach oben weisendes Ende einer oberen (10) der beiden Schließzungen (10, 12) beim Anschlagen gegen den Dachhimmel (6) oder die Halterung (14) vom Dachhimmel (6) bzw. von der Halterung (14) durch die Zugkraft des Gurtes (2) nach unten gedrückt wird, so dass die obere Schließzunge (10) eine im wesentlichen horizontale Lage einnimmt.

4. Schließzungenanordnung nach Anspruch 3, **dadurch gekennzeichnet, dass** die obere Schließzunge (10) die untere Schließzunge (12) in eine im Wesentlichen horizontale Lage drückt.

5. Schließzungenanordnung nach einem der Ansprüche 1 bis 4, **dadurch gekennzeichnet, dass** mindestens eine (12) der beiden Schließzungen (10, 12) mit einem Permanentmagneten (84) versehen ist, der einen aus magnetischem oder magnetisierbarem Material bestehenden Teil (88) der anderen Schließzunge (10) anzieht, um die Schließzungen (10, 12) in Bezug zueinander in einer vorbestimmten Lage zu halten.

6. Schließzungenanordnung nach einem der Ansprüche 1 bis 5, **dadurch gekennzeichnet, dass** zwei Schwerpunkte (So, Su) einer oberen (10) und einer unteren (12) der beiden Schließzungen (10, 12) bei aufgewickeltem Sicherheitsgurt (2) in einer gedachten Ebene (E) angeordnet sind, die von dem nach oben zur Umlenk- oder Aufrollvorrichtung (8, 4) verlaufenden Abschnitt des Sicherheitsgurtes (2) aufgespannt wird.

7. Schließzungenanordnung nach Anspruch 1, **dadurch gekennzeichnet, dass** der Schwerpunkt (So) der oberen Schließzunge (10) im Bereich einer Gurtöse (26) angeordnet ist, durch die der nach oben zur Umlenk- oder Aufrollvorrichtung (8, 4) verlaufende Abschnitt des Sicherheitsgurtes (2) hindurchtritt.

8. Schließzungenanordnung nach Anspruch 1 oder 7, **dadurch gekennzeichnet, dass** der Schwerpunkt (Su) der unteren Schließzunge (12) im Bereich einer Austrittsstelle (28) des Sicherheitsgurtes (2) aus der unteren Schließzunge (12) angeordnet ist.

9. Schließzungenanordnung nach einem der Ansprüche 1 bis 8, **dadurch gekennzeichnet, dass** bei aufgewickeltem Sicherheitsgurt (2) der von der Umlenk- oder Aufrollvorrichtung (8, 4) nach unten zu einer unteren (12) der beiden Schließzungen
(10, 12) verlaufende Sicherheitsgurt (2) nach dem Hindurchtritt durch eine Gurtöse (26) in einer oberen (10) der beiden Schließzungen (10, 12) in der unteren Schließzunge (12) umgelenkt ist.

10. Schließzungenanordnung nach Anspruch 9, **dadurch gekennzeichnet, dass** die untere Schließzunge (12) mit einer Umlenkeinrichtung (56) versehen ist, die entgegen der Kraft einer Feder (58) verschiebbar ist.

11. Schließzungenanordnung nach Anspruch 10, **dadurch gekennzeichnet, dass** die Umlenkeinrichtung (56) vom Einrastende (22) der unteren Schließzunge (12) weg verschiebbar ist.

12. Sicherheitsgurt, **gekennzeichnet durch** eine Schließzungenanordnung nach einem der vorangehenden Ansprüche.

13. Kraftfahrzeug, **gekennzeichnet durch** mindestens einen Sicherheitsgurt nach Anspruch 12.

## Claims

1. Locking tongue arrangement for a vehicle seat belt which in the extended condition extends from a deflection or retraction device arranged in the interior roof of a vehicle down to two belt buckles arranged on either side of a seat, the seat belt having two locking tongues which, when the seat belt is retracted, are held in a predetermined position close to one another at the interior roof and, when the belt is extended, are drawn down to the respective belt buckles and latched therein, **characterized in that** the common centre of gravity (S) of the two locking tongues (10, 12) lies in a plane (E) defined by a vertical belt section (2) such that at least the lower one of the locking tongues (10, 12) is automatically aligned substantially horizontally when the belt hangs down freely.

2. Locking tongue arrangement according to Claim 1, **characterized in that** a relatively heavy front latching end (22) of an upper one (10) of the two locking tongues (10, 12) lies on a relatively lightweight rear gripping end (30) of a lower one (12) of the two locking tongues (10, 12) and presses the latter down with such a force that the lower locking tongue (12) is aligned substantially horizontally.

3. Locking tongue arrangement according to Claim 2, **characterized in that**, when it impacts against the interior roof (6) or the mounting (14), an obliquely upwardly pointing end of an upper one (10) of the two locking tongues (10, 12) is pressed down from the interior roof (6) or the mounting (14) by the tensile force of the belt (2) such that the upper locking tongue (10) adopts a substantially horizontal position.

4. Locking tongue arrangement according to Claim 3, **characterized in that** the upper locking tongue (!0) presses the lower locking tongue (12) into a substantially horizontal position.

5. Locking tongue arrangement according to one of Claims 1 to 4, **characterized in that** at least one (12) of the two locking tongues (10, 12) is provided with a permanent magnet (84) which attracts a part (88), made of a magnetic or magnetizable material, of the other locking tongue (10) in order to keep the locking tongues (10, 12) in a predetermined position in relation to one another.

6. Locking tongue arrangement according to one of Claims 1 to 5, **characterized in that**, when the seat belt (2) is retracted, two centres of gravity (So, Su) of an upper one (10) and a lower one (12) of the two locking tongues (10, 12) are arranged in an imaginary plane (E) which is defined by that section of the seat belt (2) which extends up to the deflection or retraction device (8, 4).

7. Locking tongue arrangement according to Claim 1, **characterized in that** the centre of gravity (So) of the upper locking tongue (10) is arranged in the region of a belt slit (26) through which that section of the seat belt (2) which extends up to the deflection or retraction device (8, 4) passes.

8. Locking tongue arrangement according to Claim 1 or 7, **characterized in that** the centre of gravity (Su) of the lower locking tongue (12) is arranged in the region of an exit point (28) at which the seat belt (2) comes out of the lower locking tongue (12).

9. Locking tongue arrangement according to one of Claims 1 to 8, **characterized in that**, when the seat belt (2) is retracted, the seat belt (2) extending from the deflection or retraction device (8, 4) down to a lower one (12) of the two locking. tongues (10, 12), after passing through a belt slit (26) in an upper one (10) of the two locking tongues (10, 12), is deflected in the lower locking tongue (12).

10. Locking tongue arrangement according to Claim 9, **characterized in that** the lower locking tongue (12) is provided with a deflection device (56) which can be displaced in opposition to the force of a spring (58).

11. Locking tongue arrangement according to Claim 10, **characterized in that** the deflection device (56) can be displaced away from the latching end (22) of the lower locking tongue (12).

12. Seat belt, **characterized by** a locking tongue arrangement according to one of the preceding claims.

13. Vehicle, **characterized by** at least one seat belt according to Claim 12.

## Revendications

1. Ensemble de languettes de verrouillage pour une ceinture de sécurité d'un véhicule automobile, qui en position étirée s'étend d'un dispositif de renvoi ou d'enroulement disposé sur le pavillon d'un véhicule automobile vers le bas, vers deux verrous de ceinture disposés de part et d'autre d'un siège, la ceinture de sécurité comportant deux languettes de verrouillage, qui lorsque la ceinture de sécurité est enroulée sont maintenues sur le pavillon à proximité l'une de l'autre dans une position prédéfinie et qui lorsqu'on étire la ceinture sont tirées vers le bas, vers les verrous de ceinture concernés et s'enclenchent dans ces derniers, **caractérisé en ce que** le centre de gravité commun (S) des deux languettes de verrouillage (10, 12) se trouve dans un plan (E) qui est défini par une section verticale de ceinture (2) pour qu'au moins la languette de verrouillage inférieure (10, 12) s'oriente automatiquement sensiblement à l'horizontale, lorsque la ceinture pend librement vers le bas.

2. Ensemble de languettes de verrouillage selon la revendication 1, **caractérisé en ce qu'**une extrémité d'enclenchement supérieure plus lourde (22) d'une languette supérieure (10) parmi les deux languettes de verrouillage (10, 12) s'appuie sur une extrémité de préhension postérieure plus légère (30) d'une languette inférieure (12) parmi les deux languettes de verrouillage (10, 12) et presse cette dernière vers le bas avec une force telle que la languette de verrouillage inférieure (12) soit orientée sensiblement à l'horizontale.

3. Ensemble de languettes de verrouillage selon la revendication 2, **caractérisé en ce que** lorsqu'elle arrive en butée contre le pavillon (6) ou la fixation (14), une extrémité dirigée en diagonale vers le haut d'une languette supérieure (10) parmi les deux languettes de verrouillage (10, 12) est pressée par le pavillon (6) ou par la fixation (14) vers le bas par la force de traction de la ceinture (2), pour que la languette de verrouillage supérieure (10) adopte une position sensiblement horizontale.

4. Ensemble de languettes de verrouillage selon la revendication 3, **caractérisé en ce que** la languette de verrouillage supérieure (10) presse la languette de verrouillage inférieure (12) dans une position sensiblement horizontale.

5. Ensemble de languettes de verrouillage selon l'une quelconque des revendications 1 à 4, **caractérisé en ce qu'**au moins l'une (12) des deux languettes de verrouillage (10, 12) est munie d'un aimant permanent (84) qui attire un élément (88) en matériau magnétique ou magnétisable de l'autre languette de verrouillage (10), pour amener les languettes de verrouillage (10, 12) dans une position réciproque prédéfinie.

6. Ensemble de languettes de verrouillage selon l'une quelconque des revendications 1 à 5, **caractérisé en ce que** lorsque la ceinture de sécurité (2) est enroulée, deux centres de gravité (So, Su) d'une languette supérieure (10) et d'une languette inférieure (12) des deux languettes de verrouillage (10, 12) se trouvent dans un plan imaginaire (E) qui est formé par la section de la ceinture de sécurité (2) qui s'étend vers le haut, vers le dispositif de renvoi ou d'enroulement (8, 4).

7. Ensemble de languettes de verrouillage selon la revendication 1, **caractérisé en ce que** le centre de gravité (So) de la languette de verrouillage supérieure (10) se trouve dans la zone d'une boucle de ceinture (26), que traverse la section de la ceinture de sécurité (2) qui s'étend vers le haut, vers le dispositif de renvoi ou d'enroulement (8, 4).

8. Ensemble de languettes de verrouillage selon la revendication 1 ou 7, **caractérisé en ce que** le centre de gravité (Su) de la languette de fermeture inférieure (12) se trouve dans la zone d'un point de sortie (28) de la ceinture de sécurité (2) hors de la boucle de verrouillage inférieure (12).

9. Ensemble de languettes de verrouillage selon l'une quelconque des revendications 1 à 8, **caractérisé en ce que** lorsque la ceinture de sécurité (2) est enroulée, la ceinture de sécurité (2) s'étendant du dispositif de renvoi ou d'enroulement (8, 4) vers le bas, vers une languette inférieure (12) des deux languettes de verrouillage (10, 12), après avoir passé une boucle de ceinture (26) dans une languette supérieure (10) des deux languettes de verrouillage (10, 12) est renversée dans la languette de verrouillage inférieure (12).

10. Ensemble de languettes de verrouillage selon la revendication 9, **caractérisé en ce que** la languette de verrouillage inférieure (12) est munie d'un système de renvoi (56) qui est déplaçable à l'encontre de la force d'un ressort (58).

11. Ensemble de languettes de verrouillage selon la revendication 10, **caractérisé en ce que** le système de renvoi (56) est déplaçable de façon à s'éloigner de l'extrémité d'enclenchement (22) de la languette de verrouillage inférieure (12).

12. Ceinture de sécurité, **caractérisée par** un ensemble de languettes de verrouillage selon l'une quelconque des revendications précédentes.

13. Véhicule automobile, **caractérisé par** au moins une ceinture de sécurité selon la revendication 12.
